(19) **Europäisches Patentamt**

**European Patent Office**

**Office européen des brevets**

(11) Veröffentlichungsnummer: **0 356 859 B1**

(12) **EUROPÄISCHE PATENTSCHRIFT**

(45) Veröffentlichungstag der Patentschrift: **23.12.92**

(51) Int. Cl.5: **B01J 20/28**, B01D 39/00

(21) Anmeldenummer: **89115359.5**

(22) Anmeldetag: **19.08.89**

(54) Filter- und Trockeneinsätze für Kältemittelkreisläufe.

(30) Priorität: **01.09.88 DE 3829585**

(43) Veröffentlichungstag der Anmeldung:
**07.03.90 Patentblatt 90/10**

(45) Bekanntmachung des Hinweises auf die
Patenterteilung:
**23.12.92 Patentblatt 92/52**

(84) Benannte Vertragsstaaten:
**BE DE GB IT**

(56) Entgegenhaltungen:
**US-A- 3 375 933**
**US-A- 4 013 566**
**US-A- 4 061 807**
**US-A- 4 266 408**
**US-A-35 456 22**

(73) Patentinhaber: **BAYER AG**

**W-5090 Leverkusen 1 Bayerwerk(DE)**

(72) Erfinder: **Puppe, Lothar, Dr.**
**Am Weiher 10 A**
**W-5093 Burscheid(DE)**
Erfinder: **Kreuder, Hans-Joachim, Dr.**
**Doerperhofstrasse 35**
**W-4150 Krefeld(DE)**
Erfinder: **Buysch, Hans-Josef, Dr.**
**Brandenburger Strasse 28**
**W-4150 Krefeld(DE)**

## Beschreibung

Die vorliegende Erfindung betrifft Filter- und Trockeneinsätze für Kältemittelkreisläufe sowie ein Verfahren zu deren Herstellung.

Für die Trocknung von Kältemitteln sind kombinierte Filter- und Trockeneinsätze in Form zylindrischer Formkörper bekannt (vgl. z.B. US-A-3 545 622, US-A-4 013 566). Sie werden in Trocknergehäuse eingespannt und in dieser Form in den Kältemittelkreislauf integriert. Die Filtertrockner werden aus anorganischen Sorbentien mit einem Bindemittel hergestellt oder die Adsorptionsmittel werden als Granulate in lockerer Schützung in einen Hohlkörper eingebracht, der als Filter dienen soll und z.B. aus einem porösen keramischen Material besteht.

Die Herstellung von adsorptionsmittelhaltigen keramischen Hohlkörpern erfordert mehrere arbeitsaufwendige Arbeitsschritte. Daher werden zunehmend mit organischen und/oder anorganischen Bindemitteln gebundene Filtertrockner eingesetzt. Filtertrockner haben die Aufgabe, aus den Kältemittelkreisläufen neben Wasser noch Säuren, Ölharze und Schmutzanteile zu entfernen. Mit organischen Bindemitteln gebundene Filtertrockner haben entsprechend ihrem Adsorptionsmittelanteil deutlich geringere Wasseraufnahmen, da ein großer Teil der Poren, die in das Innere der Einzelkörner zu dem Adsorptionsmittel führen, durch die organischen Bindemittel verschlossen sind.

Um diese Nachteile zu beheben, ist die Verwendung von organischen Lösungsmitteln vorgeschlagen worden. Hierbei sollen bei den bei erhöhter Temperatur ablaufenden Aushärtungsprozessen die Lösungsmittelanteile verdampfen und damit die Bindemittelschicht durchbrechen, um somit eine Oberflächenporosität zu schaffen.

Nachteilig an diesem Verfahren ist, daß für das Entfernen von Lösungsmitteln aus z.B. zeolithhaltigen Filtertrocknern hohe Temperaturen erforderlich sind und häufig die volle Adsorptionsleistung nicht erreicht wird und die Filterkomponenten für die Säuren und Ölharze ihre Aktivität nicht entfalten können. Ungünstig ist ebenfalls der notwendige Aufwand zur Beseitigung der Lösungsmitteldämpfe.

Es war daher Aufgabe der vorliegenden Erfindung, diese Nachteile zu beseitigen.

Gegenstand der vorliegenden Erfindung sind daher anorganische Adsorptionsmittel enthaltende Filter- bzw.

Trockenformkörper, insbesondere für Kältemittelkreisläufe, dadurch gekennzeichnet, daß sie als Bindemittel ausgehärtete duroplastische Pulverlacke enthalten.

Das erfindungsgemäße Material vermeidet die vorher geschilderten Nachteile und zeichnet sich durch eine einfache Herstellung aus. Überraschenderweise wurde gefunden, daß Filtertrockner, die entweder aus verschiedenen Kombinationen als auch aus Einzelkomponenten von granuliertem Silicagel, Aluminiumoxid und Molekularsieb sowie Aktivkohle bestehen, ohne wesentliche Einbußen in ihrer Adsorptionsfähigkeit und mit guter Durchlässigkeit mit feinteiligem organischem Pulverlack in einem einfachen Verfahrensschritt gebunden werden können.

Die Adsorptionsmittelkomponenten bestehen aus granuliertem Material mit einer Körnung zwischen 0,2 und 2 mm, bevorzugt 0,5 - 1 mm.

Die Mischungsverhältnisse der einzelnen Komponenten können je nach Einsatzzweck der Filtertrockner beliebig eingestellt werden und sind nicht auf die in den Beispielen angegebenen Verhältnisse eingeschränkt.

Die einzelnen Komponenten für die Herstellung der Filtertrockner werden in handelsüblichen Mischern vor der Fertigung gemischt.

Als Kieselgel ist handelsübliches Kieselgel verwendbar; ebenso ist als Aluminiumoxid-Komponente handelsübliche Ware einsetzbar. Als Aktivkohle ist Form- bzw. Kornkohle mit entsprechendem Kornspektrum geeignet.

Als feinteilige organische Pulverlacksysteme sind solche auf Basis von Epoxid-, Polyester-, Acrylsäureester-Copolymerisate- und Polyurethanharzen einsetzbar. Einen Überblick über derartige Pulverlacke gibt z.B. S.T.Harris, The Technology of Powder Coatings, Protcullis Press Ltd. Redhill, Gr. Britain, 1976.

Verwendet werden können handelsübliche transparente bzw. unpigmentierte und farbig pigmentierte Pulverlacke, die üblicherweise nach dem elektrostatischen Auftragsverfahren zur Beschichtung elektrisch leitender, geerdeter Werkstücke bie einer Spannung von 10-100 kV, vorzugsweise bei 40-90 kV, aufgetragen werden.

Derartige Pulverlacke können als Bindemittel Rohstoffe (Harze und Härter) unterschiedlicher chemischer Basis enthalten. Geeignet sind z.B. ein Epoxidharz auf BGEB-Basis (Bisglycidylether des Bisphenol A) mit einem Härter auf Basis Dicyandiamid, Tolyl- bzw. Xylylbiguanide oder deren Derivate, eventuell in beschleunigter Version enthalten. Das gleiche gilt sinngemäß auch für Phenoxyharze, die mit ähnlichen Härtern gehärtet werden.

Ferner sind handelsübliche Pulverlacke geeignet, die als "Mischpulver" klassifiziert werden und aus Mischungen von Epoxidharzen wie oben mit verzweigten Carboxylpolyestern auf Basis von Terephthal- oder Isophthalsäure, Glykolen, Polyolen und gegebenenfalls Trimellithsäureanhydrid bestehen und eine Säurezahl von 35 bis 80, vorzugsweise 40 - 60 mg KOH/g, haben.

Geeignet sind auch handelsübliche Pulverlacke auf Polyurethanbasis, die als Bindemittel hydroxyhaltige Polymere, vorzugsweise aus Terephthalbzw. Isophthalsäure, mit Glykolen und Polyolen enthalten und eine OH-Zahl von 15 - 200, vorzugsweise 30 - 70 mg KOH/g, aufweisen. Als Härter werden Addukte aus aromatischen, aliphatischen bzw. cycloaliphatischen Diisocyanaten verwendet, die entweder mit Caprolactam reversibel verkappt oder intern über (Poly)Uretdionbindungen blockiert und endständig irreversibel verkappt sind.

Schließlich sind auch Pulverlacke geeignet, die als Bindemittel carboxylhaltige Polymere, vorzugsweise auf Basis Terephthal- bzw. Isophthalsäure bzw. Trimellithsäure bzw. Trimellithsäureanhydrid, und Glykole und Polyole enthalten. Als Härter dienen in solchen Fällen niedrigmolekulare, aliphatische, cycloaliphatische oder heterocyclische Polyepoxide, vorzugsweise aber Triglycidylisocyanurat (TGIC = Araldit PT 810, Handelsprodukt der Ciba-Geigy AG, Basel).

Die Aushärtung zu einer duroplastischen Beschichtung erfolgt durch Einbrennen bei Temperaturen oberhalb von 120°C oer durch Einwirkung von IR-Strahlen. Die Dauer der Wärmeeinwirkung richtet sich nach der Höhe der gewählten Temperatur bzw. Strahlungsintensität in Abhängigkeit zu seiner spektralen Verteilung.

Die nachfolgenden Beispiele dienen zur Veranschaulichung des erfindungsgemäßen Verfahrens und stellen keine Einschränkung dar.

Beispiel 1

40 g Molekularsiebgranulat vom 4 Å-Typ (0,5-1,0 mm Körnung), 40 g Aluminiumoxidgranulat mit der Körnung 0,5 - 1,0 mm und 40 g Silicagel, 0,5 - 1,0 mm Körnung, werden mit 20 g feinteiligem Pulverlack auf Polyurethanbasis gemischt.

Die Menge an Pulverlack entspricht einem Bindemittelanteil von 15 %. Die Adsorptionsmittel-/Bindemittelmischung wird in eine Form gefüllt, die vorher mit Teflon®-Spray als Trennmittel ausgesprüht wurde und 10 Minuten auf 200°C aufgeheizt und mit einem Druck von 20 bar zusammengepreßt. Nach dem Abkühlen erhält man einen festen Filterblock.

Die Durchlässigkeit entspricht bei einer Schichtdicke von 17 mm einer Druckerhöhung von 4 mm Wassersäule bei einer Anströmflache von 1,1 mm$^2$ und einem Luftdurchsatz von 400 Nl/h.

Die Adsorptionsleistung liegt bei 75 % der für den Adsorptionsmittelanteil theoretisch errechenbaren Menge.

Beispiel 2

40 g Molekularsiebgranulat vom 4Å-Typ (0,5 - 1,0 mm Körnung), 40 g Aluminiumoxidgranulat mit der Körnung 0,1 - 1,0 mm und 40 g Silicagel (0,5 - 1,0 mm Körnung) werden mit 13,4 g Pulverlack auf Epoxidharzbasis gemischt.

Die Menge an Pulverlack entspricht einem Bindemittelanteil von 10 %.

Die Adsprotionsmittel-/Bindemittelmischung wird in eine Form gefüllt, die vorher mit einem Teflon®-Spray als Trennmittel ausgesprüht wurde. Anschließend wird die Form auf 200°C geheizt und 10 Minuten belassen, wobei die Mischung mit 40 bar zusammengepreßt wird.

Nach dem Abkühlen erhält man einen festen, durchlässigen Filterblock.

Die Durchlässigkeit entspricht bei einer Schichtdicke von 17 mm einer Druckerhöhung von 3,5 mm Wassersäule bei einer Anströmfläche von 1,1 mm$^2$ und einem Luftdurchsatz von 400 Nl/h.

Die Adsorptionsleistung liegt bei 80 % der für den Adsorptionsmittelanteil berechenbaren Menge.

Beispiel 3

60 g Molekularsiebgranulat vom 3Å-Typ (0,5 -1,0 mm Kornung), 30 g Aluminiumoxidgranulat (0,5 - 1,0 mm Körnung) und 30 g Silicagel (0,5 - 1,0 mm Körnung) werden mit 11 g Pulverlack auf Polyesterharzbasis gemischt. Die Menge an Pulverlack entspricht einem Bindemittelanteil von 8 %.

Die Adsorptionsmittel-/Bindemittelmischung wird in eine Form gefüllt, die vorher mit Teflon® beschichtet wurde. Anschließend wird die Form auf 180°C aufgeheizt und ca. 15 Minuten bei dieser Temperatur belassen, wobei die Mischung mit 60 bar zusammengepreßt wird.

Die Durchlässigkeit entspricht bei einer Schichtdicke von 17 mm einer Druckerhöhung von 3 mm Wassersäule bei einer Anströmfläche von 1,1 m$^2$ und einem Luftdurchsatz von 400 Nl/h.

Die Adsorptionsleistung liegt bei 85 % der für den Adsorptionsmittelanteil berechneten Menge.

Beispiel 4

80 g Molekularsiebgranulat vom 3Å-Typ (0,5 - 1,0 mm Körnung), 40 g Aluminiumoxidgranulat (0,5 - 1,0 mm Körnung) werden mit 30 g Pulverlack auf Epoxidharzbasis gemischt. Die Menge an Pulverlack entspricht einem Bindemittelanteil von 20 %.

Die Adsorptionsmittel-/Bindemittelmischung wird in eine Form gefüllt, die vorher mit Teflon® beschichtet wurde. Anschließend wird die Form auf 190°C aufgeheizt und ca. 12 Minuten bei dieser Temperatur belassen, wobei die Mischung mit 40 bar zusammengepreßt wird. Nach dem Abkühlen erhält man einen festen, durchlässigen Filterblock.

Die Durchlässigkeit entspricht bei einer Schichtdicke von 17 mm einer Druckerhöhung von 4,0 mm Wassersäule bei einer Anströmfläche von

1,1 mm$^2$ und einem Luftdurchsatz von 400 Nl/h.

Die Adsorptionsleistung liegt bei 70 % der für den Adsorptionsmittelanteil berechenbaren Menge.

**Patentansprüche**

1. Anorganische Adsorptionsmittel enthaltende Filter- bzw. Trockenformkörper, dadurch gekennzeichnet, daß sie als Bindemittel ausgehärtete duroplastische Pulverlacke enthalten.

2. Verfahren zur Herstellung der Filter- bzw. Trockenformkörper gemäß Anspruch 1, dadurch gekennzeichnet, daß die anorganischen Adsorptionsmittel mit Pulverlack versehen und dieser ausgehärtet wird.

3. Verwendung anorganischer Adsorptionsmittel gemäß einem der Ansprüche 1 oder 2 als Filter- bzw. Trockenformkörper für Kältemittelkreisläufe.

**Claims**

1. Filter or dry inserts containing inorganic adsorbents, characterized in that they contain cured thermoset powder lacquers as binder.

2. A process for the production of the filter or dry inserts claimed in claim 1, characterized in that the inorganic adsorbents are provided with powder lacquer and the powder lacquer is then cured.

3. The use of inorganic adsorbents according to claim 1 or 2 as filter or dry inserts for coolant circuits.

**Revendications**

1. Corps moulés de filtrage ou de séchage contenant des agents d'adsorption inorganiques, caractérisés en ce qu'ils contiennent comme liants des vernis en poudre thermodurcissables durcis.

2. Procédé pour la fabrication de corps moulés de filtrage ou de séchage selon la revendication 1, caractérisé en ce que les agents d'adsorption inorganiques sont pourvus de vernis en poudre et que celui-ci est durci.

3. Utilisation des agents d'adsorption inorganiques selon l'une des revendications 1 ou 2 comme corps moulés de filtrage ou de séchage pour des circuits de fluides frigorifiques.